## Europäisches Patentamt

## European Patent Office

## Office européen des brevets

(11) Veröffentlichungsnummer: **0 208 195**
**B1**

(12) **EUROPÄISCHE PATENTSCHRIFT**

(45) Veröffentlichungstag der Patentschrift:
09.05.90

(51) Int. Cl.⁵: **C01G 49/08**, C09C 1/24

(21) Anmeldenummer: 86108630.4

(22) Anmeldetag: 25.06.86

(54) Verfahren zur Herstellung von Magnetitpigmenten.

(30) Priorität: 29.06.85 DE 3523317

(43) Veröffentlichungstag der Anmeldung:
14.01.87 Patentblatt 87/3

(45) Bekanntmachung des Hinweises auf die Patenterteilung:
09.05.90 Patentblatt 90/19

(84) Benannte Vertragsstaaten:
DE FR GB NL

(56) Entgegenhaltungen:
DE-A- 2 508 155
DE-A- 2 721 013
DE-A- 3 026 686
US-A- 4 459 276

(73) Patentinhaber: BASF Aktiengesellschaft,
Carl-Bosch-Strasse 38, D-6700 Ludwigshafen(DE)

(72) Erfinder: Ostertag, Werner, Dr., Oberer-Bergel-Weg 2,
D-6718 Grünstadt(DE)
Erfinder: Wienand, Henning, Dr., Kornstrasse 64a,
D-6823 Neulussheim(DE)
Erfinder: Bauer, Roland, Halbenmorgen 32,
D-5060 Bergisch-Gladbach 1(DE)

ACTORUM AG

**Beschreibung**

Die Erfindung betrifft ein Verfahren zur Herstellung von Magnetitpigmenten aus Eisen(II)salzlösungen, wobei gezielt eine mittlere Teilchengröße im Bereich von 0,06 bis 0,5 µm einstellbar ist.

Die Herstellung von Magnetitpigmenten ist bekannt. Sie werden üblicherweise durch Versetzen einer Eisen(II)salzlösung mit einer für die Fällung der Eisen(II)ionen ausreichenden Menge Alkali oder Erdalkali und anschließender Oxidation des Eisenhydroxidniederschlags bei erhöhter Temperatur mittels Durchleiten von Luft erhalten. Die meisten Verfahren berücksichtigen dabei auch die Verwendung von Abbeizflüssigkeiten oder Abfall-Lösungen von der Titandioxid-Herstellung. Entsprechende Herstellverfahren sind u.a. in den DE-A 2 508 085, DE-A 2 721 013 und DE-A 3 004 718 sowie in der US-A 4 090 888 beschrieben.

Die auf diese oder ähnliche Weise erhaltenen Magnetitpigmente werden vorwiegend als Schwarz- bzw. Farbpigmente oder als Magnetpigmente für Toner in der Reprographie verwendet. Im Zusammenhang mit dem Einsatz insbesondere im Farbpigmentbereich ist ein wesentliches Kriterium die gezielte Einstellung der Teilchengröße des Magnetits. So hängt der Farbton des Magnetits und beispielsweise auch der durch Calcinieren des Magnetits hergestellten Rotpigmente unmittelbar von der Teilchengröße ab. In gleicher Weise wird auch die Fixierfähigkeit Magnetit enthaltender Einkomponenten-Tonerteilchen von der Teilchengröße des Magnetits beeinflußt. Es hat daher nicht an Versuchen gefehlt, mit Hilfe des Herstellverfahrens die Teilchengröße des synthetischen Magnetits zu beeinflussen.

So wird in der DE-A 2 508 085 ein Verfahren zur Steuerung der Teilchengröße von Magnetit beschrieben, bei dem der Aufschlämmung, welche durch Ausfällung von Eisensulfat mittels Alkalien erhalten wurde, Lepidokrokit zugesetzt wird. Dabei läßt sich durch die Menge an zugegebenem Lepidokrokit die Teilchengröße des Magnetits beeinflussen und zwar wird die Teilchengröße in dem Umfang vermindert, in dem der Anteil an zugegebenem Lepidokrokit ansteigt. Dieses Verfahren hat jedoch den Nachteil, daß ein in der Korngröße definierter Lepidokrokit bereitzustellen ist und daß das resultierende Produkt inhomogen wird, was sich wenn auch nicht unmittelbar bei der Farbklassifizierung so doch hinsichtlich der magnetischen Eigenschaften des Magnetitpigments ungünstig auswirkt.

Es bestand daher die Aufgabe, ein Verfahren zur Herstellung von Magnetitpigmenten bereitzustellen, mit welchem sich in zuverlässiger und reproduzierbarer Weise durch einfache Anpassung eines Verfahrensparameter die Einstellung einer bestimmten Teilchengröße bewerkstelligen läßt, ohne jedoch die vorgenannten Nachteile aufzuweisen.

Es wurde nun gefunden, daß sich mit einem Verfahren zur Herstellung von Magnetitpigmenten bei dem in einer Fällungsphase eine wäßrige Eisen(II)salzlösung zu einer wäßrigen Lösung von Alkali- oder Erdalkalihydroxiden bei einem pH-Wert von 7 bis 14 und einer Temperatur von 60 bis 100°C zugesetzt wird und in einer anschließenden Oxidationsphase der Eisenhydroxidniederschlag durch Einleiten eines sauerstoffhaltigen Gases bei einer Temperatur von 60 bis 100°C bis zu einem Fe(II)/Fe(III)-Verhältnis von 0,5 bis 0,23 oxidiert wird, die Aufgabe in einfacher Weise lösen läßt, wenn zwischen der Fällungsphase und der Oxidationsphase die Suspension in einer Verweilphase unter Beibehaltung von pH-Wert und Temperatur 5 bis 180 Minuten lang gerührt wird.

In einer vorteilhaften Ausgestaltung des erfindungsgemäßen Verfahrens wird während der Verweilphase gerührt und/oder Stickstoffgas in die Suspension eingeblasen.

Die Herstellung der Magnetitpigmente ist an sich bekannt. So wird die zur Fällung der gesamten Eisen(II)ionen erforderliche Alkali- bzw. Erdalkalimenge in einem beheizbaren Kessel vorgelegt und auf 60 bis 100°C, vorzugsweise 70 bis 90°C erhitzt. Daraufhin wird unter Rühren und Einhalten eines pH-Wertes zwischen 7 und 14, vorzugsweise zwischen 8 und 12 die gesamte Eisen(II)salzlösung zugeführt, was zweckmäßigerweise innerhalb von 30 Minuten erfolgt. Erfindungsgemäß wird nun die durch die Ausfällung entstandene Suspension unter Beibehaltung von Temperatur und pH-Wert 5 bis 180 Minuten lang gegebenenfalls unter Durchleiten von Stickstoffgas gerührt. Hierbei entscheidet die Dauer der Verweilphase über die mittlere Teilchengröße der resultierenden Magnetitpigments. Sie kann als Parameter für die reproduzierbare Einstellung der Teilchengröße herangezogen werden. Die mittlere Teilchengröße kann im Bereich von 0,06 bis 0,5 µm eingestellt werden, wobei die mittlere Teilchengröße mit zunehmender Dauer der Verweilphase ansteigt. Nach Beendigung der Verweilphase wird der Eisenhydroxidniederschlag in der Suspension durch Einleiten eines sauerstoffhaltigen Gase, üblicherweise Luft, bei einer Temperatur von 60 bis 100°C unter Rühren oxidiert. Das Endprodukt der Oxidation läßt sich einfach anhand des Fe(II)/Fe(III)-Verhältnisses bestimmen. In der Praxis wird vielfach eine leichte Überoxidation in Kauf genommen, deren Dimensionierung in einfacher Weise analytisch durch eine Fe(II)/Fe(III)-Bestimmung erfolgt. Abschließend wird das resultierende Magnetpigment filtriert, gewaschen und getrocknet.

Mit Hilfe des erfindungsgemäßen Verfahrens ist es möglich, Magnetitpigmente in einfacher Weise reproduzierbar unter gezielter Einstellung einer Teilchengröße im Bereich von 0,06 bis 0,5 µm herzustellen. Die Möglichkeit ein an sich bekanntes Verfahren durch die Handhabung eines einzigen zusätzlichen Prozeßschritts, der Verweilphase, so zu beeinflussen, daß mit Hilfe eines einzigen Parameters, die Teilchengröße des Magnetits eingestellt werden kann, war überraschend und nicht vorhersehbar. Ein weiteres vorteilhaftes Ergebnis des erfindungsgemäßen Verfahrens ist die enge Teilchengrößenverteilung des auf eine bestimmte mittlere Teilchengröße eingestellten Magnetits.

Die Erfindung sei anhand nachfolgender Beispiele näher erläutert.

**Beispiel 1**

In einem beheizbaren 4-l-Glasbehälter, der mit einem Rührer versehen ist, werden 195,2 g festes NaOH und 1,5 l $H_2O$ eingetragen und solange gerührt, bis eine vollständige Lösung erfolgt. Die NaOH-Lösung wird auf 80°C erhitzt und anschließend innerhalb von 8 Minuten unter Rühren mit 678,2 g technischer $FeSO_4 \cdot nH_2O$ (19,8 Gew.% Fe) gelöst in 2,5 l $H_2O$ versetzt. Der pH-Wert beträgt nach der Fällung $9,6 \pm 0,2$.

Bei Temperaturen von $80 \pm 5°C$ wird die Suspension anschließend 30 Minuten lang gerührt (Verweilphase). Daraufhin werden in die Suspension 20 l/h Luft über ein Gaseinleitungsrohr während einer Zeitspanne von 5,5 h eingeleitet. Während dieser Zeit wird gerührt (300 U/Min.), die Temperatur wird bei $80 \pm 5°C$ gehalten und der pH-Wert durch Zutropfen einer 10 %igen wäßrigen NaOH-Lösung auf $10,5 \pm 0,2$ eingestellt. Nach 5,0 bis 5,4 Stunden unterschreitet das Fe(II)/Fe(III)-Verhältnis den Wert 0,5 wie sich durch Titration des Fe(II)-Gehaltes feststellen läßt. Nach 5,5 Stunden wird abgebrochen. Das entstandene Magnetitpigment wird filtriert, gewaschen und im Vakuumtrockenschrank bei 80°C getrocknet.

Das resultierende Pigment ist tiefschwarz. Es zeigt das Röntgendiagramm von Magnetit und weist ein Fe(II)/Fe(III)-Verhältnis von 0,4 auf. Die freie Oberfläche nach BET ($N_2$) hat einen Wert von 9,0 $m^2/g$. Aus elektronenmikroskopischen Aufnahmen geht hervor, daß die mittlere Korngröße des in kubischer Form anfallenden Produktes bei 0,3 µm liegt. Die in einem Meßfeld von 160 kA/m bestimmten Magnetwerte betragen: Koerzitivfeldstärke $H_c$ = 12,0 kA/m, spezifische Remanenz $M_r/\rho$ = 16 $nTm^3/g$ und spezifische Magnetisierung $M_m/\rho$ = 99 $nTm^3/g$.

**Beispiel 2 bis 6**

In den folgenden Beispielen wurde wie in Beispiel 1 beschrieben, verfahren, jedoch mit dem Unterschied, daß jeweils Verweilphasen von 6 min, 10 min, 35 min, 60 min, 120 min gewählt wurden. Sämtliche Produkte zeigen das Röntgendiagramm von Magnetit.

Die Ergebnisse sind in der Tabelle zusammengestellt.

**Tabelle**

| Beispiel | Verweil-phase (Dauer in Min.) | mittlerer Ø (aus elektr. mikros. Aufn.) µm | BET Oberfl. $m^2/g$ | $H_c$ [kA/m] | $M_m/\rho$ [$nTm^3/g$] | $M_r/\rho$ [$nTm^3/g$] |
|---|---|---|---|---|---|---|
| 2 | 6 | 0,08 | 15 | 12,4 | 99 | 18 |
| 3 | 10 | 0,2 | 10 | 12,1 | 99 | 17 |
| 4 | 35 | 0,3 | 8,5 | 11,9 | 98 | 16 |
| 5 | 60 | 0,35 | 7,7 | 11,5 | 98 | 16 |
| 6 | 120 | 0,4 | 7 | 11,3 | 98 | 14 |

**Patentansprüche**

1. Verfahren zur Herstellung von Magnetitpigmenten bei dem in einer Fällungsphase eine wäßrige Eisen(II)salzlösung zu einer wäßrigen Lösung von Alkali- oder Erdalkalihydroxiden bei einem pH-Wert von 7 bis 14 und einer Temperatur von 60 bis 100°C zugesetzt wird und in einer anschließenden Oxidationsphase der Eisenhydroxidniederschlag durch Einleiten eines sauerstoffhaltigen Gases bei einer Temperatur von 60 is 100°C bis zu einem Fe(II)/Fe(III)-Verhältnis von 0,5 bis 0,23 oxidiert wird, dadurch gekennzeichnet, daß zwischen der Fällungsphase und der Oxidationsphase die Suspension in einer Verweilphase unter Beibehaltung von pH-Wert und Temperatur 5 bis 180 Minuten lang gerührt wird.

2. Verfahren gemäß Anspruch 1, dadurch gekennzeichnet, daß während der Verweilphase gerührt und/oder Stickstoffgas in die Suspension eingeblasen wird.

**Claims**

1. A process for the preparation of a magnetic pigment, in which an aqueous iron(II) salt solution is added to an aqueous solution of an alkali metal or alkaline earth metal hydroxide at pH 7–14 and from 60 to 100°C in a precipitation phase, and the iron hydroxide precipitate is oxidised in a subsequent oxidation phase by passing an oxygen-containing gas at from 60 to 100°C until the Fe(II)/Fe(III) ratio reaches from 0.5 to 0.23, wherein the suspension is stirred for from 5 to 180 minutes during a residence phase between the precipitation phase and the oxidation phase, while maintaining the pH and temperature.

2. A process as claimed in claim 1, wherein, during the residence phase, stirring is carried out and/or nitrogen gas is blown into the suspension.

**Revendications**

1. Procédé de préparation de pigments de magnétite selon lequel, dans une étape de précipitation, on ajoute, à une température de 60 à 100°C et un pH de 7 à 14, une solution aqueuse de sel de fer-II à une solution aqueuse d'hydroxydes alcalins ou alcalino-terreux et dans une étape d'oxydation subséquente, on oxyde le précipité d'hydroxyde de fer jusqu'à un rapport Fe-II/Fe-III de 0,5 à 0,23 par introduction d'un gaz oxygéné à une température de 60 à 100°C, ce procédé étant caractérisé par le fait qu'entre l'étape de précipitation et l'étape d'oxydation, on brasse la suspension, dans une étape de séjour, pendant 5 à 180 minutes en maintenant le pH et la température.

2. Procédé selon la revendication 1, caractérisé par le fait que pendant l'étape de séjour, on brasse la suspension et/ou on y insuffle de l'azote gazeux.